# EUROPÄISCHE PATENTSCHRIFT

(11) **EP 1 133 210 B1**
(45) Veröffentlichungstag und Bekanntmachung des Hinweises auf die Patenterteilung: **19.11.2003**
(21) Anmeldenummer: 00127225.1
(22) Anmeldetag: 15.12.2000
(51) Int. Cl.: H04Q 11/04

(54) **Anordnung zur Herstellung einer Datenverbindung mittels optischen S0-Busses**
Arrangement for establishing a data connection using optical S0 bus
Dispositif pour établir une connexion de données utilisant un bus S0 optique

(30) Priorität: 05.02.2000 DE 10005204
(43) Veröffentlichungstag der Anmeldung: 12.09.2001
(73) Patentinhaber: Deutsche Telekom AG, 53113 Bonn (DE)
(72) Erfinder: Giehmann, Lutz, 10559 Berlin (DE); Schmidt, Dieter, 13589 Berlin (DE); Ziemann, Olaf, Dr., 12307 Berlin (DE)

(56) Entgegenhaltungen:
- EP-A- 0 760 587
- US-A- 5 572 527
- US-A- 5 673 258

## Beschreibung

Die Erfindung betrifft eine Anordnung zur Herstellung einer Datenverbindung zwischen digitalen Kommunikationseinrichtungen, wie zum Beispiel einem Übergabepunkt (NTBA) eines Telekommunikationsnetzwerkes und wenigstens einem internen Verbraucher, wobei zwischen Übergabepunkt und dem wenigstens einen Verbraucher ein S₀-Bus geschaltet ist.

Anordnungen der gattungsgemäßen Art sind bekannt. So sind an einen ISDN(integrated services digital network)-Übergabepunkt angeschlossene, verbrauchereigene Nebenstellenanlagen üblicherweise mit einem sogenannten S₀-Bus ausgestattet. Über diesen S₀-Bus können Datenverarbeitungsgeräte, beispielsweise Personal Computer, Notebooks oder dergleichen, und Telekommunikationsgeräte mit dem Übergabepunkt zum Zwecke einer Datenübertragung kommunizieren. Aufbau und Wirkungsweise eines derartigen S₀-Busses sind allgemein bekannt, so dass im Rahmen der vorliegenden Beschreibung hierauf nicht näher eingegangen werden soll.

Bekannt ist, diese S₀-Busse leitungsgebunden über verdrillte Kupfer-Doppeladern (2 Doppeladern) auszubilden. Derartige Kabel sind mit einer metallischen Abschirmung versehen, um elektromagnetische Störungen der Datenübertragung zu vermeiden (EMV-Schutz). Zum Betreiben des S₀-Busses ist vorgesehen, dass sowohl der Übergabepunkt als auch den Verbrauchern zugeordnete Anschlussmodule (ISDN-Karten oder dergleichen) mit einer Spannungsversorgung, üblicherweise der Netzspannung von 220 V, betrieben werden. Durch diese Schaltungskonstellation ergibt sich, dass über die Abschirmung des leitungsgebundenen S₀-Busses und den Null-Leiter der Spannungsversorgung es zur Ausbildung einer Leiterschleife kommen kann, in der es bei im Versorgungsspannungsnetz auftretender Überspannungen, beispielsweise durch Blitzeinschläge oder dergleichen, zu einer Spannungsinduktion kommen kann. Hierdurch besteht die Gefahr von Zerstörungen oder zumindest von Beeinträchtigungen der Funktion der an den S₀-Bus angeschlossenen Verbraucher.

Aus der EP 0 760 587 A ist ein hybrides Glasfaser-Koaxialkabel-Breitband-Anschlussnetz zum Anschluss von Funkteilnehmern an Funkbasisstationen bekannt, wobei die Funkbasisstationen wie ISDN-Teilnehmer an Abzweigungen zu den Koaxialkabelstrecken des hybriden Anschlussnetzes angeschlossen sind.

Aus US 5,673,258 ist die Ausbildung eines S₀-Busses zur Datenübertragung bekannt, wobei der S₀-Bus zur bidirektionalen Datenübertragung aus zwei Kupferleitungen je Übertragungsrichtung besteht.

Der Erfindung liegt daher die Aufgabe zugrunde, eine Anordnung der gattungsgemäßen Art zu schaffen, die in einfacher Weise eine Datenübertragung gestattet und einen Überspannungsschutz bietet.

Erfindungsgemäß wird diese Aufgabe durch eine Anordnung mit den im Anspruch 1 genannten Merkmalen gelöst. Dadurch, dass der S₀-Bus eine optische Übertragungsstrecke ist und der Übergabepunkt und der wenigstens eine Verbraucher über jeweils einen Digital/Opto- beziehungsweise Opto/Digital-Wandler mit der Übertragungsstrecke verbunden sind, lässt sich in vorteilhafter Weise die Datenübertragung über den S₀-Bus optisch realisieren. Hierzu bedarf es keiner zusätzlichen metallischen Abschirmleitung, so dass die Gefahr einer Bildung einer Leiterschleife über das Versorgungsspannungsnetz nicht besteht. Hierdurch ergibt sich ein optimaler Überspannungsschutz für die an den S₀-Bus angeschlossenen Verbraucher beziehungsweise den Übergabepunkt zu dem Telekommunikationsnetzwerk.

In bevorzugter Ausgestaltung der Erfindung ist vorgesehen, dass die optische Übertragungsstrecke eine Polymerfaser umfasst. Hierdurch lässt sich ein S₀-Bus über relativ große Längen in einfacher und preiswerter Weise aufbauen. Derartige optische Polymerfasern gestatten eine verlustarme Datenübertragung über große Entfernungen. Darüber hinaus sind derartige optische Polymerfasern unempfindlich gegen elektromagnetische Störungen, so dass ihr Einsatz für die Datenübertragung optimal geeignet ist. Ferner ist vorteilhaft, dass optische Polymerfasern eine große Übertragungskapazität bieten, so dass in einfacher Weise gegenüber den S₀-Bus-Standards eine Anpassung an breitbandigere Übertragungsverfahren, insbesondere ATM oder IEEE1394, möglich ist.

In weiterer bevorzugter Ausgestaltung der Erfindung vorgesehen, dass die Digital/Opto-Wandler beziehungsweise Opto/Digital-Wandler jeweils einen optischen Sender und einen optischen Empfänger umfassen. Hierdurch wird in einfacher Weise eine bidirektionale Datenübertragung zur Aufrechterhaltung des S₀-Bus-Datenverkehrs möglich. So können pro Polymerfaser vorteilhaft zwei Kanäle mit bis zu 40 dB Dynamikbereich übertragen werden.

Durch den geringen Bauteileaufwand kann der Sender in ein NTBA und der Empfänger in die Communicationen Interface-Karte im Rechner integriert werden, um eine direkte optische S₀-Bus-Verbindung ohne Zusatzgeräte zu ermöglichen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch in einem Blockschaltbild die erfindungsgemäße Anordnung;
- Figur 2: die erfindungsgemäße Anordnung in einer ersten Ausbaustufe;
- Figur 3: ein Blockschaltbild eines Digital/Opto-Wandlers;
- Figur 4: ein Blockschaltbild eines optischen Empfängers;
- Figur 5: eine Kennlinie eines Koinzidenz-Demodulators des optischen Empfängers;
- Figur 6: schematisch in einem Blockschaltbild eine zweite Ausführungsvariante der erfindungsgemäßen Anordnung;
- Figur 7: schematisch den Signalverlauf vor und nach einem Digital/Opto-Wandler und
- Figuren 8 bis 22: verschiedene Anwendungen der erfindungs mäßen Anordung jeweils in Blockschaltbil dern.

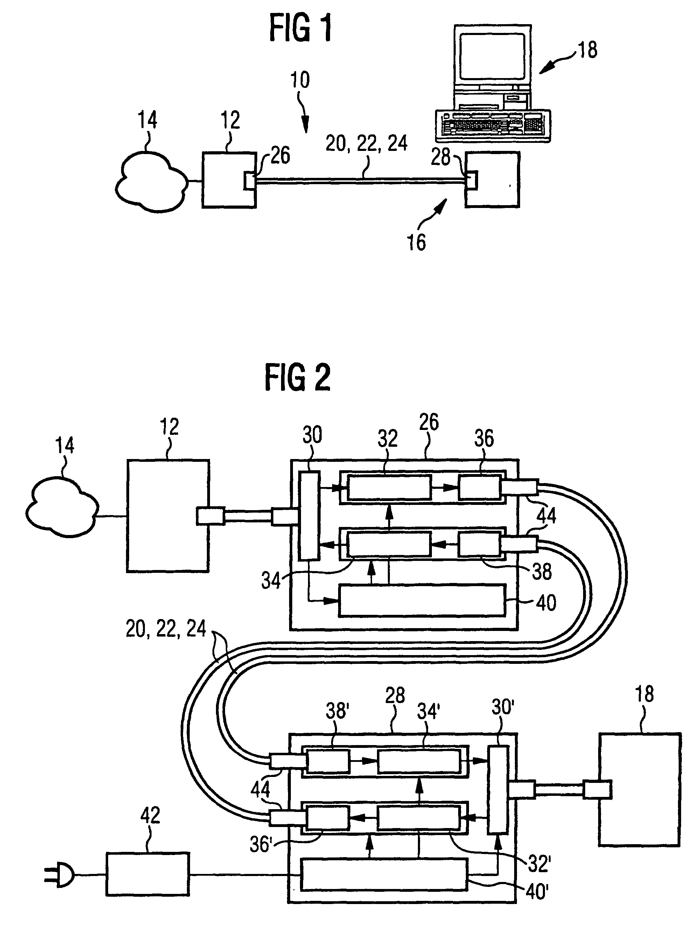

Figur 1 zeigt in einem Blockschaltbild den grundsätzlichen Aufbau der erfindungsgemäßen Anordnung 10. Die Anordnung 10 umfasst einen Übergabepunkt 12, eine sogenannte NTBA, zwischen einem Telekommunikationsnetzwerk 14 und einer verbraucherseitigen Nebenstellenanlage 16. Die Nebenstellenanlage 16 umfasst wenigstens einen Verbraucher 18, in der Regel mehrere Verbraucher 18. Der Verbraucher 18 ist beispielsweise eine Datenverarbeitungsanlage (Personal Computer). Der Verbraucher 18 ist mit dem Übergabepunkt 12 über einen S₀-Bus 20 verbunden. Der S₀-Bus 20 ist standardmäßiger Bestandteil einer auf ISDN basierenden Kommunikationsanlage. Der S₀-Bus 20 wird von einer optischen Übertragungsstrecke 22 gebildet. Die optische Übertragungsstrecke 22 umfasst eine Polymerfaser 24, die einerseits mit dem Übergabepunkt 12 und andererseits mit dem Verbraucher 18 verbunden ist. Im Übergabepunkt 12 ist ein Digital/Opto-Wandler 26 angeordnet, während verbraucherseitig ein Opto/Digital-Wandler 28 angeordnet ist. Eine Datenverbindung des Verbrauchers 18 mit einem weiteren, nicht dargestellten Verbraucher über das Telekommunikationsnetzwerk 14 erfolgt somit intern, das heißt verbraucherseitig, bis zum Übergabepunkt 12 über einen optischen S₀-Bus. Die digitalen Signale werden zur Übertragung über den optischen S₀-Bus jeweils in den Wandlern 26 beziehungsweise 28 in optische Signale moduliert beziehungsweise demoduliert.

Figur 2 zeigt ein Ersatzschaltbild des optischen S₀-Busses 20. Der Digital/Opto-Wandler 26 umfasst einen Übertrager 30, der die Verbindung mit dem Telekommunikationsnetzwerk 14 über den Übergabepunkt 12 aufrechterhält. Der Übertrager 30 ist mit einem Modulator 32 sowie einem Demodulator 34 verbunden. Der Modulator 32 ist mit einem optischen Sender 36 verbunden, während der Demodulator 34 mit einem optischen Empfänger 38 verbunden ist. Die optischen Sender 36 beziehungsweise Empfänger 38 sind mit der Polymerfaser 24 gekoppelt. Ferner umfasst der Wandler 24 eine Spannungsversorgung 40 zum Bereitstellen einer Versorgungsspannung für den Modulator 32 beziehungsweise den Demodulator 34. Die Versorgungsspannung für Modulator 32 und Demodulator 34 beträgt beispielsweise 5 V. Diese Versorgungsspannung wird aus einer über das Telekommunikationsnetzwerk 14 bereitgestellten Spannung, die beispielsweise 40 V beträgt, transformiert.

Der verbraucherseitig angeordnete Opto/Digital-Wandler 28 besitzt einen zum Digital/Opto-Wandler 26 analogen Aufbau aus einem Übertrager 30', einem Modulator 32', einem Demodulator 34', einem optischen Sender 36', einem optischen Empfänger 38' sowie einer Spannungsversorgung 40'. Die Spannungsversorgung 40' ist mit einem Netzteil 42 verbunden, das eine Versorgungsspannung aus einem verbraucherseitigen Spannungsversorgungssystem, beispielsweise auf 220V-Basis, bereitstellt und entsprechend runtertransformiert.

Die optischen Sender 36 beziehungsweise 36' und die optischen Empfänger 38 beziehungsweise 38' sind über Kupplungen 44 mit der Polymerfaser 24 gekoppelt.

Die optische Polymerfaser 24 besitzt beispielsweise einen Durchmesser von 1 mm mit einer Dämpfung von 70 dB/km. Ein optimaler Dämpfungsbereich der Polymerfaser 24 mit PMMA als Kernmaterial (Polymethylmetacrylat) liegt somit im Bereich von 560 nm. Der optische Sender 36 beziehungsweise 36' wird von einer GaN-Lumineszenzdiode mit einer Sendewellenlänge von zirka 560 nm gebildet. Eine Leistung des optischen Senders 36 beträgt beispielsweise 1200 µW bei einem Strom von 20 mA. Die optischen Empfänger 38 beziehungsweise 38' werden von Photodioden gebildet.

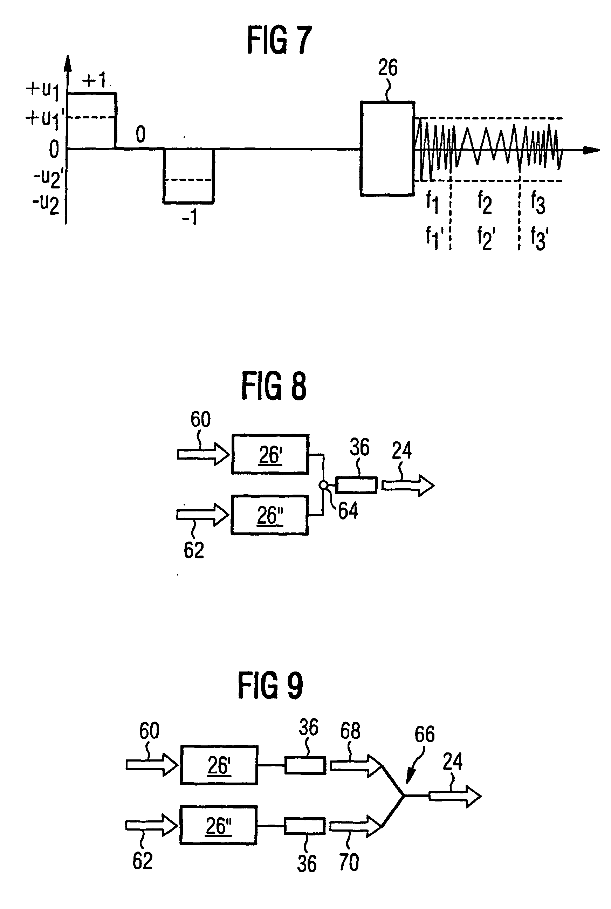

Die Modulation der digitalen Signale in die optischen Signale erfolgt über eine dreistufige Frequenzmodulation (frequency shift keeing), die anhand von Figur 7 näher erläutert wird. Bekanntermaβen wird der S₀-Bus-Leitungscode (AMI(alternate mark inversion)-Code) als pseudoternärer Code mit drei unterschiedlichen Potentialen von +U₁ = 750 mV entspricht +1, 0 V entspricht 0 und -U₁ = -750 mV entspricht -1 definiert. Der Spannungshub hierbei beträgt 1,5 V. Durch Spannungspulse mit den entsprechenden drei Spannungspotentialen können so binäre Datencodes übertragen werden. Durch die dreistufigen Frequenzmodulation wird mittels der Digital/Opto-Wandler 26 beziehungsweise 28 das Spannungspotential +U₁ in eine Frequenz f₁, das Spannungspotential 0 V in eine Frequenz f₂ und das Spannungspotential -U₁ in eine Frequenz f₃ umgesetzt. Entsprechend der hierbei festgelegten Frequenzen f₁, f₂, f₃ wird das optische Signal moduliert über den optischen S₀-Bus 20 übertragen. In Figur 7 ist der Zustand der Datenübertragung dargestellt, bei dem der Spannungshub 1,5 V beträgt. Im sogenannten aktiven Ruhezustand, bei dem die am S₀-Bus 20 angeschlossenen Verbraucher ein Rahmensynchronwort senden, beträgt der Spannungshub 1,2 V, das heißt U₁' = 600 mV und -U₁' = -600 mV. Diese geänderten Spannungspotentiale werden in geänderte proportionale Frequenzen f₁' und f₃' gewandelt. Die Frequenz f₂ für das Spannungspotential 0 V bleibt gleich. Hierdurch lässt sich die dreistufige Frequenzmodulation in einfacher Weise an eine Datenübertragung und an den aktiven Ruhezustand anpassen. Der Ruhezustand kann unabhängig vom Pegel des empfangenen Signals erkannt werden.

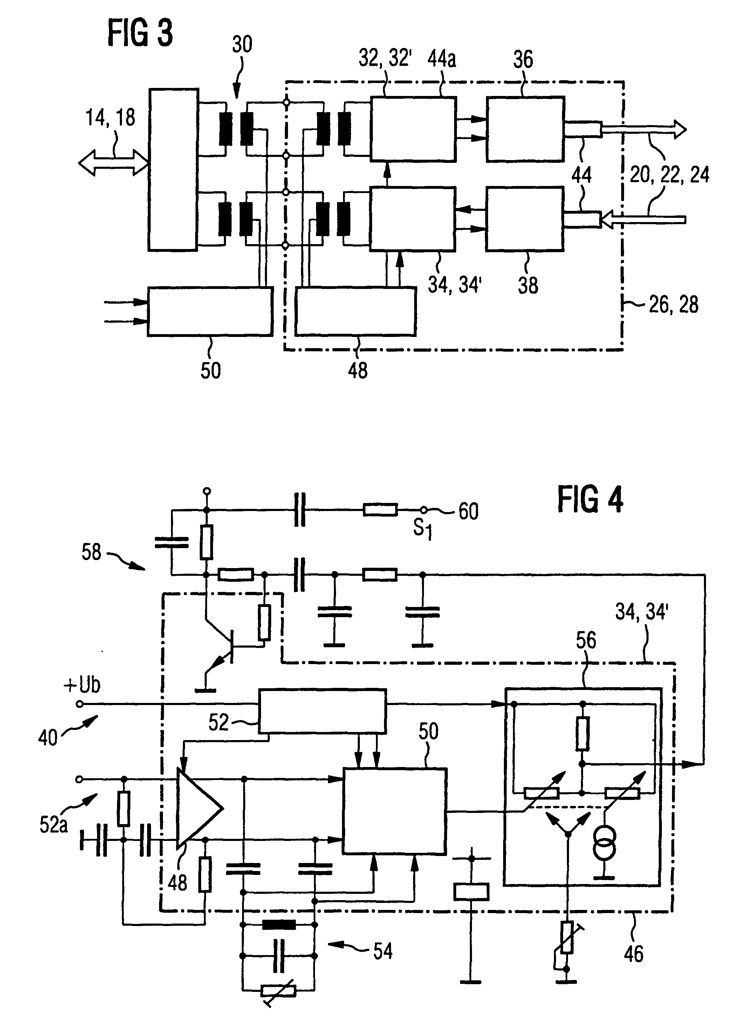

Figur 3 verdeutlicht in einem Blockschaltbild die Ankopplung der Wandler 26 beziehungsweise 28 an das Telekommunikationsnetzwerk 14 beziehungsweise an den Verbraucher 18. Der Modulator 32 beziehungsweise 32' wird von einem spannungsgesteuerten Oszillator 44a gebildet, während der Demodulator 34 und 34' von einem FM-ZF-Verstärker 48 mit Koinzidenz-Demodulator 50 gebildet ist. Aufbau und Wirkungsweise dieses Demodulators 34 beziehungsweise 34' wird anhand von Figur 4 noch näher erläutert. Dem Spannungsoszillator 44a ist eine Spannungsanpassungsschaltung 48 zugeordnet, über die die Frequenzanpassung an die übertragenen Spannungspotentiale - wie anhand von Figur 7 erläutert - erfolgt. Ferner ist eine Notspannungsversorgung 50 vorgesehen, über die der Betrieb des S₀-Busses 20 bei Ausfall einer regulären Spannungsversorgung möglich ist.

Das Ersatzschaltbild des Demodulators 34 beziehungsweise 34' ist in Figur 4 gezeigt. Dieser umfasst den Verstärker 48, dem der Koinzidenz-Demodulator 50 nachgeschaltet ist. Ein Eingangsanschluss 52a des Verstärkers 48 ist mit dem optischen Empfänger 38 verbunden. Verstärker 48 und Koinzidenz-Demodulator 50 sind mit einer internen Spannungsversorgung 52 verbunden, die ihre Spannungsversorgung +U_{b} von der Spannungsversorgung 40 erhält. Der Koinzidenz-Demodulator 50 wird ferner von einem Phasenschieber 54, der aus einer Induktivität, Kapazität und einem einstellbaren Ohmschen Widerstand besteht, gesteuert.

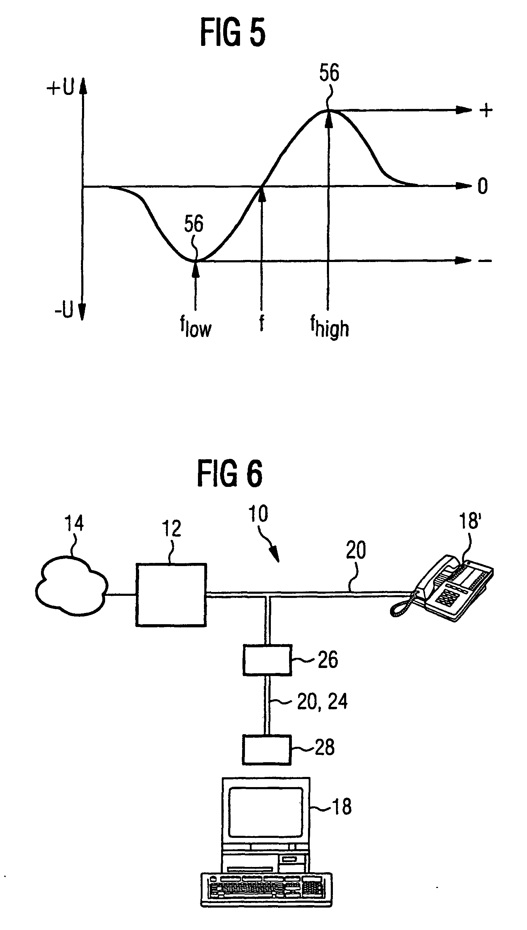

Der Verstärker 48 weist eine relativ hohe Verstärkung auf von beispielsweise 68 dB und Begrenzungseigenschaften von beispielsweise 30 dB AM-Unterdrückung bei 200 *µ*V Eingangsspannung. Hierdurch wird erreicht, dass der Verstärker 48 an den Koinzidenz-Demodulator 50 im optischen Empfangsleistungs-Bereich - am Anschluss 52a - von -40 dBm bis -5 dBm eine konstante, einwandfrei symmetrisch begrenzte Spannung liefert. Hierdurch ist die Koinzidenz-Demodulatorausgangsspannung unabhängig von der optischen Eingangsleistung und streng proportional dem angebotenen Sende-Frequenzhub entsprechend dem über den S₀-Bus 20 übertragenen, frequenzmodulierten optischen Signales. Der Phasenschieber 54 sichert eine hohe Konstanz der Frequenzmodulations-Wandlerkennlinie. Da keine lineare FM/AM-Übertragung der Signale erfolgt, sondern nur drei Spannungspotentialzustände aus den übertragenen Frequenzen f₁, f₂, f₃ gewonnen werden müssen, kann der Phasenschieber 54 so dimensioniert sein, dass bei maximalem Frequenzhub die untere Frequenz f_{low} und die obere Frequenz f_{high} (siehe Figur 5) in den Umkehrpunkten 56 der Diskriminator-Funktion liegen. Hierdurch wird eine zusätzliche Rauschminderung für die digitalen -1- und +1-Zustände erreicht. Durch eine Veränderung der Güte des Phasenschieberkreises 54 kann der Abstand der Umkehrpunkte 56 eingestellt werden. Hierdurch besteht eine Einstellmöglichkeit der dreistufigen Frequenzmodulation. Insbesondere bei gegenüber dem ISDN-Netz schneller arbeitenden Systemen kann in einfacher Weise eine Anpassung der dreistufigen Frequenzmodulation erfolgen.

Dem Koinzidenz-Demodulator 50 ist eine Stromregelschaltung 56 nachgeschaltet, die das demodulierte Signal einem Tiefpass 58 zuführt. Über die Stromregelschaltung 56 wird eine Stromverteilungsänderung möglich, obwohl am Ausgang des Koinzidenz-Demodulators 50 zunächst nur ein Gleichspannung führendes Signal anliegt. Hierdurch wird eine Anpassung an unterschiedliche S₀-Bus-Trenntransformatoren möglich. Über den Tiefpass 58 erfolgt eine Nachverstärkung des Signales für eine Signal-Konditionierung (Deemphases). Der Tiefpass 58 ist dreistufig ausgebildet. Am Ausgangsanschluss 60 des Demodulators 34, der gleichzeitig Eingangsanschluss des Übertragers 30 (Figur 2) ist, liegt das demodulierte digitale Signal S₁ an.

Figur 6 zeigt in einem Blockschaltbild eine abgewandelte Ausführungsform der erfindungsgemäßen Anordnung 10. Hierbei sind an dem Übergabepunkt 12 der bereits in Figur 1 erläuterte Verbraucher 18 und über den S₀-Bus 20 ein weiterer Verbraucher 18' , beispielsweise ein ISDN-Telefon, angeschlossen. Der S₀-Bus 20 ist somit aufgeteilt, einmal für als ISDN-Telefone ausgebildete Verbraucher 18', wobei hier eine bekannte Ausführungsform, beispielsweise als mehradrige Kupferleitung oder dergleichen, gewählt sein kann. Ferner ist ein Teilabschnitt des S₀-Busses 20 als Polymerfaser 24 ausgebildet, wobei über die Wandler 26 beziehungsweise 28 die erläuterte Datenübertragung erfolgt. Die Umkehrpunkte der S-förmigen Wandlerkennlinie werden über die Betriebsgüten des Kreises mittels dem Parallelwiderstand eingestellt.

Durch diese Ausgestaltung ergibt sich, dass die gesamte Anordnung 10 ohne eigene Spannungsversorgung des Übergabepunktes 12 (NTBA) betrieben werden kann. Eine Leistungsaufnahme der Verbraucher 18' beträgt beispielsweise 4,5 Watt, während eine Leistungsaufnahme der Verbraucher 18 über den Wandler 26 unter 415 mW gehalten werden kann. Hierdurch kann eine Spannungsversorgung der Anordnung 10 über die vorhandene Spannungsversorgung über das Telekommunikationsnetz 14, die üblicherweise 40 V bis 60 V beträgt, übernommen werden. Eine zusätzliche, interne Spannungsversorgung mit einem Spannungsversorgungsnetz, beispielsweise von 220 V, würde somit entfallen. Somit macht sich der Einsatz entsprechender Netzteile nicht erforderlich.

In den Figuren 8 bis 22 sind verschiedene Ausführungsvarianten des Einsatzes der erfindungsgemäßen Anordnung 10 erläutert. In den Figuren 8 bis 22 sind jeweils Blockschaltbilder gezeigt, die insbesondere einen Multiplex/Demultiplex-Betrieb und/oder einen bidirektionalen Betrieb der Anordnung 10 schematisch verdeutlichen.

Figur 8 zeigt beispielsweise eine sendeseitige Anordnung, bei der ein S₀-Bus 60 mit einem Digital/Opto-Wandler 26' und ein S₀-Bus 62 mit einem Digital/Opto-Wandler 26" verbunden ist. Die Digital/Opto-Wandler 26' und 26" sind über eine Koppelstelle 64 mit einem gemeinsamen optischen Sender 36 verbunden, über den die optischen Signale in die Polymerfaser 24 einspeisbar sind. Im Digital/Opto-Wandler 26' ist beispielsweise eine Umsetzung auf die Frequenzen f₁, f₂, f₃ möglich, während im Digital/Opto-Wandler 26" eine Umsetzung auf Frequenzen f₄, f₅, f₆ erfolgt. So wird ein gegenseitig sich nicht störender Multiplexbetrieb möglich.

Figur 9 zeigt eine Ausführungsvariante, bei der den Digital/Opto-Wandlern 26' beziehungsweise 26" jeweils ein optischer Sender 36 zugeordnet ist. Die optischen Sender sind dann über Polymerfasern 68 beziehungsweise 70 mit einem optischen Koppler 66 verbunden, der mit der Polymerfaser 24 verbunden ist. Bei dem Ausführungsbeispiel in Figur 9 arbeiten die optischen Sender 36 mit einer gleichen Wellenlänge λ. Die Umsetzung erfolgt im Digital/Opto-Wandler 26' in den Frequenzen f₁, f₂, f₃ und im Digital/Opto-Wandler 26" in die Frequenzen f₃, f₄, f₅.

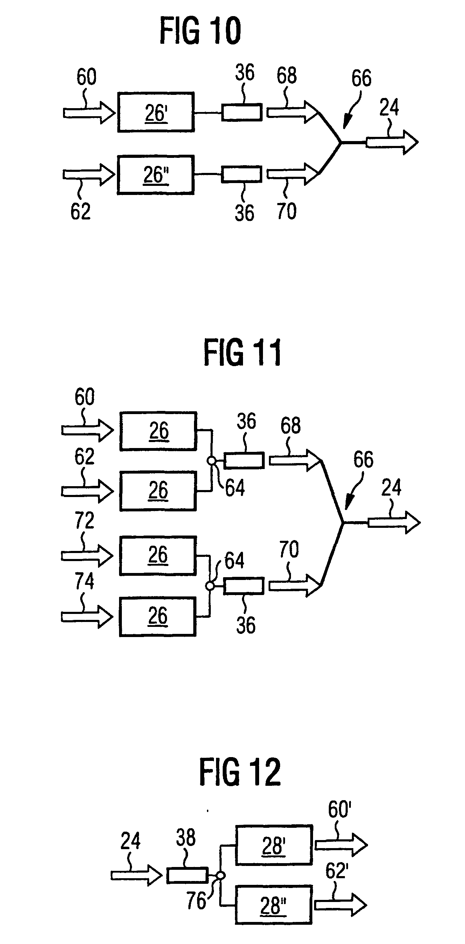

Demgegenüber zeigt Figur 10 ein Ausführungsbeispiel, bei dem die optischen Sender 36 mit unterschiedlichen Wellenlängen arbeiten, beispielsweise der dem Digital/Opto-Wandler 26' zugeordnete optische Sender 36 mit einer Wellenlänge λ₁ und der dem Digital/Optowandler 26" zugeordnete optische Sender 36 mit einer Wellenlänge λ₂. Hierdurch kann in den Digital/Optowandlern 26' beziehungsweise 26" eine Umsetzung in die jeweils gleichen Frequenzen f₁, f₂, f₃ erfolgen, da der Multiplexbetrieb über die unterschiedlichen Wellenlängen λ₁ beziehungsweise λ₂ realisiert wird.

In Figur 8 und Figur 9 ist somit ein Frequenzmultiplex-Betrieb dargestellt, während in Figur 10 ein Wellenlängenmultiplex-Betrieb dargestellt ist.

Gemäß dem in Figur 11 gezeigten Ausführungsbeispiel sind auch Kombinationen von Wellenlängenmultiplexund Frequenzmultiplex-Betrieb möglich. Hier sind S₀-Busse 60, 62, 72 und 74 jeweils mit Digital/Opto-Wandlern 26 verbunden, wobei die mit den S₀-Bussen 60 und 72 verbundenen Digital/Opto-Wandler 26 in die Frequenzen f₁, f₂, f₃ umsetzen und die mit den S₀-Bussen 62 und 74 verbundenen Digital/Opto-Wandler 26 in die Frequenzen f₄, f₅ und f₆ umsetzen. Der gemäß der Darstellung obere optische Sender 36 arbeitet hier mit der Wellenlänge λ₁, während der gemäß der Darstellung untere optische Sender 36 mit der Wellenlänge λ₂ arbeitet.

In den Figuren 12 bis 15 ist jeweils eine zu den Figuren 8 bis 11 komplementäre empfängerseitige Situation der Anordnung 10 dargestellt. Während sendeseitig ein Multiplexbetrieb erfolgt, ist empfangsseitig ein Demultiplexbetrieb, entweder im Frequenz-demultiplex-, Wellenlängendemultiplexoder kombinierten Frequenz- und Wellenlängendemultiplex-Betrieb möglich.

Gemäß Figur 12 ist die Polymerfaser 24 mit einem optischen Empfänger 38 verbunden, der über einen Teiler 76 mit Opto/Digital-Wandlern 28 verbunden ist. Die Opto/Digital-Wandler 28 sind jeweils mit einem S₀-Bus 60' beziehungsweise 62' verbunden. Hierbei setzt der Opto/Digital-Wandler 28 von den Frequenzen f₁, f₂ und f₃ um, während der Opto/Digital-Wandler 28' von den Frequenzen f₄, f₅ und f₆ umsetzt.

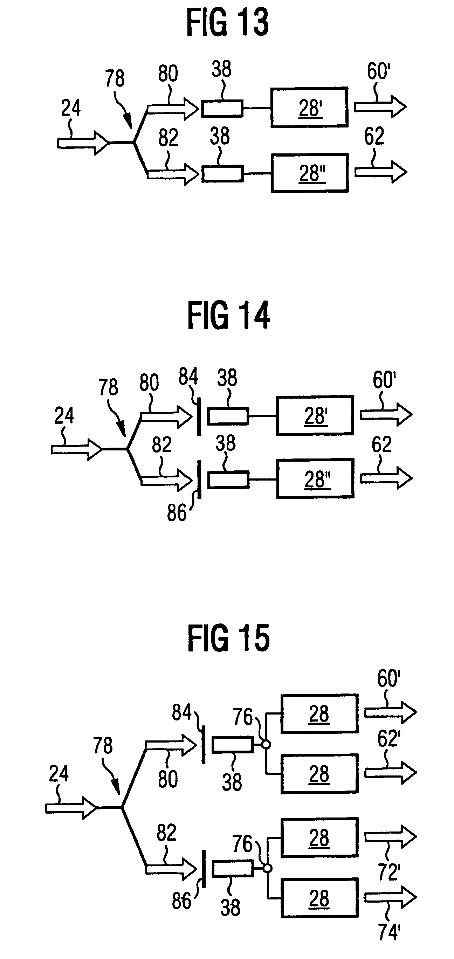

Eine entsprechende analoge Anordnung ergibt sich gemäß Figur 13, bei die Polymerfaser 24 über einen optischen Teiler 78 mit Polymerfasern 80 und 82 verbunden ist, die jeweils auf einen optischen Empfänger 38 führen. Den optischen Empfängern 38 sind die Opto/Digital-Wandler 28' beziehungsweise 28" zugeordnet. Die optischen Empfänger 38 arbeiten hier mit der gleichen Wellenlänge, so dass eine Umsetzung in dem Opto/Digital-Wandler 28' von den Frequenzen f₁, f₂ und f₃ erfolgt, während in dem Opto/Digital-Wandler 28" eine Umsetzung von den Frequenzen f₃, f₄ und f₅ erfolgt.

Demgegenüber zeigt Figur 14 eine Ausführungsvariante, bei der die optischen Empfänger 38 in unterschiedlichen Wellenlängenbereichen λ arbeiten. Hierbei ist zwischen der Polymerfaser und dem oben dargestellten optischen Empfänger 38 ein erstes Filter 84 und dem unten dargestellten optischen Empfänger 38 ein zweites Filter 86 zugeordnet. Das Filter 84 ist hierbei für optische Signale der Wellenlänge λ₁ durchlässig, während das Filter 86 für optische Signale der Wellenlänge λ₂ durchlässig ist. Hierdurch arbeiten die Opto/Digital-Wandler 28' beziehungsweise 28" mit einer Umsetzung von den gleichen Frequenzen f₁, f₂ und f₃.

Figur 15 zeigt einen kombinierten Wellenlängendemultiplex- und Frequenzdemultiplex-Betrieb. Hier erfolgt zunächst der Wellenlängendemultiplex-Betrieb über die Filter 84 beziehungsweise 86 und anschließend der Frequenzdemultiplex-Betrieb über die Opto/Digital-Wandler 28, die für die Umsetzung auf die Frequenzen f₁, f₂, f₃ beziehungsweise f₄, f₅ und f₆ ausgelegt sind.

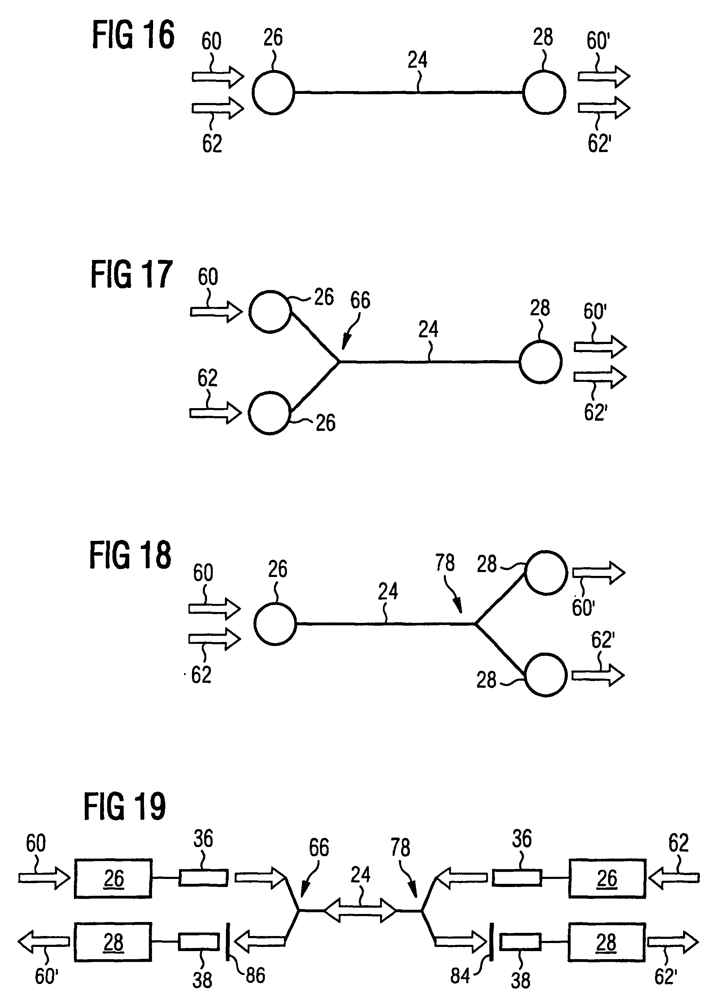

Die Figuren 16 bis 18 zeigen schematisch verschiedene Kombinationsmöglichkeiten der Verschaltung von Digital/Opto-Wandlern 26 mit Opto/Digital-Wandlern 28 innerhalb einer Anordnung 10. Figur 16 zeigt, dass ein Digital/Opto-Wandler 26 mit zwei S₀-Bussen 60 und 62 verbunden ist und eine Umsetzung auf die Frequenzen f₁, f₂, f₃, f₄, f₅ und f₆ übernimmt. Gleichzeitig ist ein Opto/Digital-Wandler 28 vorgesehen, der eine Umsetzung von den Frequenzen f₁, f₂, f₃, f₄, f₅ und f₆ auf die S₀-Busse 60' beziehungsweise 62' übernimmt.

Gemäß Figur 17 sind zwei Digital/Opto-Wandler 26 vorgesehen, die mit einem Opto/Digital-Wandler 28 verbunden sind. Entsprechend umgekehrt ist die Anordnung gemäß Figur 18, wo ein Digital/Opto-Wandler 26 mit zwei Opto/Digital-Wandlern 28 verbunden ist.

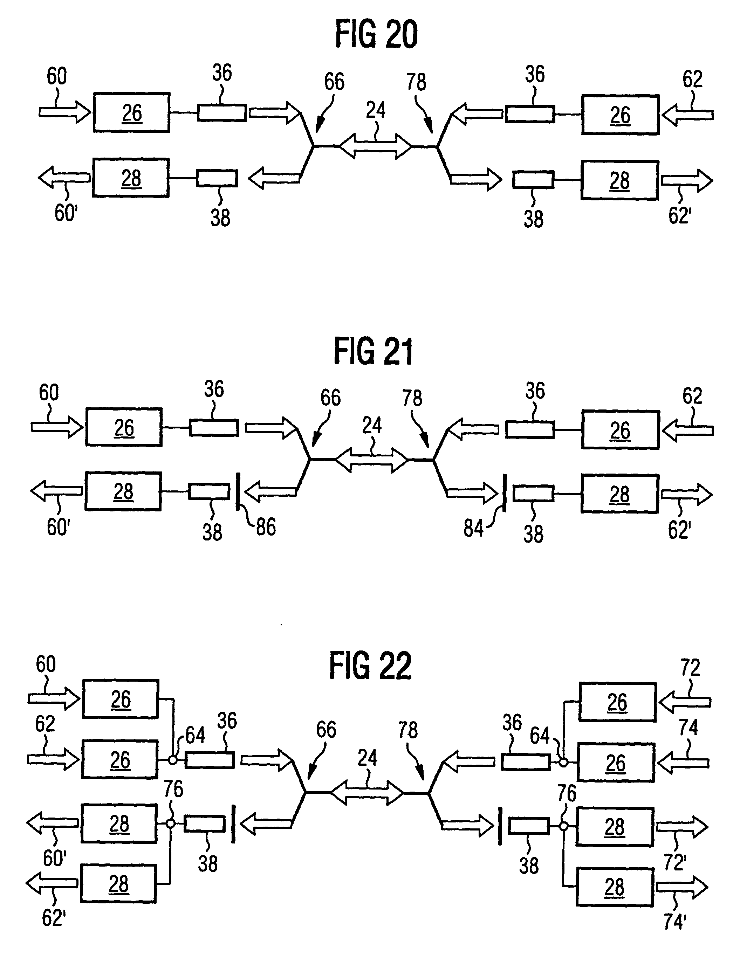

In den Figuren 19 bis 22 sind verschiedene Schaltungsanordnungen für einen bidirektionalen Multiplex- beziehungsweise Demultiplex-Betrieb gezeigt. Die Übertragung kann wiederum im Wellenlängenmultiplex/Demultiplex-Betrieb (Figuren 19 bis 21) oder in einen kombinierten Wellenlängenmultiplex/Demultiplex-Betrieb und Frequenzmultiplex/Demultiplex-Betrieb erfolgen. Die einzelnen Bauelemente sind mit gleichen Bezugszeichen wie in den vorhergehenden Figuren versehen und nicht nochmals erläutert.

Alles in allem wird deutlich, dass vielfältige Anwendungsmöglichkeiten der Realisierung von optischen S₀-Bussen über Polymerfasern 24 gegeben sind. Entsprechend der Auslegung und der Anzahl der eingesetzten Digital/Opto-Wandler 26 beziehungsweise Opto/Digital-Wandler 28 hinsichtlich ihrer Frequenz f beziehungsweise ihrer Wellenlänge λ lassen sich in einfacher Weise komplexe Systeme aufbauen.

## Patentansprüche

1. Anordnung (10) zur Herstellung einer Datenverbindung zwischen einem Übergabepunkt (12,NTBA) eines Telekommunikationsnetzwerkes (14) und wenigstens einem internen Verbraucher (18), wobei zwischen Übergabepunkt (12) und dem wenigstens einen Verbraucher (18) ein S₀-Bus (20) geschaltet ist, **dadurch gekennzeichnet, dass** der S₀-Bus (20) eine optische Übertragungsstrecke (22) ist und der Übergabepunkt (12) und der wenigstens eine Verbraucher (18) über jeweils einen Digital/Opto-Wandler (26, 28) mit der Übertragungsstrecke (22) verbunden ist.

2. Anordnung nach Anspruch 1, **dadurch gekennzeichnet, dass** die optische Übertragungsstrecke (22) eine Polymerfaser (24) ist.

3. Anordnung einem der vorhergehenden Ansprüche, **dadurch gekennzeichnet, dass** die Digital/Opto-Wandler (26, 28) jeweils einen optischen Sender (36, 36') und einen optischen Empfänger (38, 38') umfassen.

4. Anordnung einem der vorhergehenden Ansprüche, **dadurch gekennzeichnet, dass** Mittel vorgesehen sind, über die die Modulation der digitalen Signale in die optischen Signale über eine dreistufige Frequenzmodulation erfolgt.

5. Anordnung einem der vorhergehenden Ansprüche, **dadurch gekennzeichnet, dass** Mittel vorgesehen sind, über die eine Anpassung der Frequenzen (f₁, f₂, f₃) an eine Datenübertragung beziehungsweise von Frequenzen (f₁', f₂, f₃') an einen aktiven Ruhezustand erfolgt.

6. Anordnung einem der vorhergehenden Ansprüche, **dadurch gekennzeichnet, dass** der optische Sender (36, 36') von einem spannungsgesteuerten Oszillator (44) angesteuert ist.

7. Anordnung einem der vorhergehenden Ansprüche, **dadurch gekennzeichnet, dass** der optische Empfänger (38, 38') mit einem begrenzenden FM-ZF-Verstärker (48) mit Koinzidenz-Demodulator (50) verbunden ist.

8. Anordnung einem der vorhergehenden Ansprüche, **dadurch gekennzeichnet, dass** der Koinzidenz-Demodulator (50) von einem einstellbaren Phasenschieber (54) gesteuert ist, deren Güte die Übertragungsfunktion Demodulations-Charakteristik für die FSK-Modulation bestimmt.

9. Anordnung einem der vorhergehenden Ansprüche, **dadurch gekennzeichnet, dass** dem Koinzidenz-Demodulator (50) eine Stromregelschaltung (56) und ein Tiefpass (58) nachgeschaltet ist.

## Claims

1. Arrangement (10) for establishing a data connection between a transfer point (12,NTBA) of a telecommunications network (14) and at least one internal consumer (18), an S₀ bus (20) being connected between the transfer point (12) and the at least one consumer (18), **characterized in that** the S₀ bus (20) is an optical transmission link (22) and the transfer point (12) and the at least one consumer (18) are each connected to the transmission link (22) by a digital/opto converter (26, 28).

2. Arrangement according to claim 1, **characterized in that** the optical transmission link (22) is a polymer fibre (24).

3. Arrangement according to any one of the preceding claims, **characterized in that** the digital/opto converters (26, 28) each comprise an optical transmitter (36, 36') and an optical receiver (38, 38').

4. Arrangement according to any one of the preceding claims, **characterized in that** means are provided by which the modulation of the digital signals into the optical signals is accomplished by three-stage frequency modulation.

5. Arrangement according to any one of the preceding claims, **characterized in that** means are provided by which the frequencies (f₁, f₂, f₃) are adapted to a data transmission and/or frequencies (f₁', f₂, f₃') are adapted to an active idle state.

6. Arrangement according to any one of the preceding claims, **characterized in that** the optical transmitter (36, 36') is controlled by a voltage-controlled oscillator (44).

7. Arrangement according to any one of the preceding claims, **characterized in that** the optical receiver (38, 38') is connected to a limiting FM-ZF amplifier (48) with coincidence demodulator (50).

8. Arrangement according to any one of the preceding claims, **characterized in that** the coincidence demodulator (50) is controlled by an adjustable phase shifter (54), the quality of which determines the transmission function demodulation characteristic for FSK modulation.

9. Arrangement according to any one of the preceding claims, **characterized in that** the coincidence demodulator (50) is followed by a current-controlling circuit (56) and a low pass (58).

## Revendications

1. Dispositif (10) pour l'établissement d'une communication de données entre un point de connexion (12, NTBA) d'un réseau de télécommunications (14) et au moins un récepteur de courant interne (18), où un bus S₀ (20) est établi entre le point de connexion (12) et au moins un récepteur de courant (18), **caractérisé en ce que** le bus S₀ (20) est une liaison de transmission optique (22) et que le point de connexion (12) et le ou les récepteurs) de courant (18) sont chacun connectés à la liaison de transmission (22) par l'intermédiaire d'un convertisseur numérique-optique (26, 28).

2. Dispositif selon la revendication 1, **caractérisé en ce que** la liaison de transmission optique (22) est une fibre polymère (24).

3. Dispositif selon l'une des revendications précédentes, **caractérisé en ce que** les convertisseurs numériques-optiques (26, 28) comportent chacun un émetteur optique (36, 36') et un récepteur optique (38, 38').

4. Dispositif selon l'une des revendications précédentes, **caractérisé en ce que** des moyens sont prévus qui permettent la modulation des signaux numériques en signaux optiques par une modulation de fréquence à trois étages.

5. Dispositif selon l'une des revendications précédentes, **caractérisé en ce que** des moyens sont prévus qui permettent une adaptation des fréquences (f₁, f₂, f₃) à une transmission de données ou des fréquences (f₁', f₂', f₃') à un état de repos actif.

6. Dispositif selon l'une des revendications précédentes, **caractérisé en ce que** l'émetteur optique (36, 36') est activé par un oscillateur commandé par tension (44).

7. Dispositif selon l'une des revendications précédentes, **caractérisé en ce que** le récepteur optique (38, 38') est connecté à un amplificateur MF-FI (48) avec démodulateur à coïncidence (50).

8. Dispositif selon l'une des revendications précédentes, **caractérisé en ce que** le démodulateur à coïncidence (50) est commandé par un déphaseur réglable (54) dont la qualité détermine la fonction de transmission de la caractéristique de démodulation pour la modulation MDF.

9. Dispositif selon l'une des revendications précédentes, **caractérisé en ce qu'**un circuit de régulation d'intensité (56) et un filtre passe-bas sont disposés en aval du démodulateur à coïncidence (50).
